# EUROPEAN PATENT SPECIFICATION

(11) **EP 0 434 428 B1**
(45) Date of publication and mention of the grant of the patent: **02.11.1995**
(21) Application number: 90314023.4
(22) Date of filing: 20.12.1990
(51) Int. Cl.: C08G 77/60, C04B 35/58

(54) **A method for manufacturing a hafnium-containing silazane polymer and a method for manufacturing a ceramic from said polymer**
Verfahren zur Herstellung von Hafnium enthaltenden Polysilazanen und Verfahren zur Herstellung von keramischen Materialien aus diesen Polymeren
Procédé de préparation d'un polymère silazane contenant des atomes d'hafnium et procédé de fabrication des matières céramiques à partir de ces polymères

(30) Priority: 20.12.1989 JP 330108/89
(43) Date of publication of application: 26.06.1991
(73) Proprietor: SHIN-ETSU CHEMICAL CO., LTD., Chiyoda-ku Tokyo (JP)
(72) Inventor: Takeda, Yoshihumi, Joetsu-Shi, Niigata-ken (JP); Hayashida, Akira, Higashimurayama-shi, Tokyo-to (JP)
(74) Representative: Whalley, Kevin

(56) References cited:
- EP-A- 0 344 870
- FR-A- 2 611 208
- US-A- 4 886 860

## Description

The present invention relates to a method for manufacturing a hafnium-containing silazane polymer which makes a good ceramic precursor, and a method for manufacturing a ceramic from the polymer.

Although ceramics attract attention as being excellent in thermal resistance, abrasion resistance, and high temperature strength, a problem with them is the difficulty experienced in machining them owing to their hardness and brittleness. For this reason, when an article of ceramic is manufactured, the manufacture comprises: steps of preparing a finely ground ceramic powder, compacting the powder into a desired shape, and baking it (powder sintering method); or steps of melting an organic polymer ceramic precursor or dissolving it in a solvent, working the viscous liquid into a desired shape, and baking it and thereby rendering it inorganic (precursor method).

The most characteristic thing about this precursor method is that, through this, it is possible to obtain a ceramic article having a configuration which cannot ever be had by a ceramic article made through the powder sintering method. Therefore, the precursor method is virtually the only method that can produce fibrous ceramic articles. Among the materials generally referred to as "ceramics", SiC and Si₃N₄ are particularly attracting attention for the reason of their superior high temperature characteristics: respectively, SiC is excellent in heat resistance and high temperature strength, and Si₃N₄ in thermal shock resistance and fracture toughness. Consequently, researches in various precursors of the materials have been earnestly conducted.

The ceramics that are obtained through the conventionally known ceramic precursor method are mainly those based on Si-C-O composition, Si-O-N composition, and Si-C-N-O composition. On the other hand, Japanese Patent Kokai No. 56-74126 disclosed that a ceramic precursor based on polytitanocarbo silane containing metals such as Ti and Zr is manufactured by reacting titanoalkoxide with a polycarbo silane.

However, the ceramic obtained by baking the polytitanocarbo silane is based on Si-Ti-O-C composition and as such it contains a considerable amount of oxygen. Also, a ceramic such as this has a tendency of promptly losing strength at temperatures above 1300 °C owing to the crystallization it undergoes.

U. S. Patent No. 4,312,970 discloses methods for producing the ceramics based on Si-C-N composition and Si-C-N-O composition, respectively. The present inventors searched into the correlation between the crystallization and the lowering in strength of the ceramics obtained by these methods, and as a result, found that these ceramics also undergo crystallization at temperatures above 1300 °C, and thus promptly lose their strengths.

Also, it has been known that the ceramics obtained by the conventional ceramic precursor methods tend to have problems in workability and processability, and are low in ceramic yield.

Attention is also drawn to the disclosure of EP-A-344780.

The present invention was made in view of the above circumstances, and, therefore, it is an object of the invention to provide a method for manufacturing, at high ceramic yields a ceramic precursor having excellent workability and processability; and also a method for manufacturing a ceramic from the said ceramic precursor which ceramic can resist temperatures above 1300°C without losing its strength.

To attain the above object and others, the present inventors conducted research with the view of obtaining a high-strength ceramic which has a thermal resistance greater than the ceramics obtained by the conventional ceramic precursor methods. As a result, they found that ceramics based on Si-Hf-C-N composition or Si-Hf-C-N-O composition which are obtained by ceramicizing a Hf-containing silazane polymer are superior to the conventional ceramics made from silazane polymers in thermal resistance.

The present invention in a first aspect provides a method for manufacturing a hafnium-containing silazane polymer characterized by obtaining a hafnium-containing silazane polymer through a polymerization reaction of which the reactants are
(A) a halide of an organic silicon compound;
(B) a hafnium compound having a general formula (I):

   HfX₄ (I)

   wherein X is chlorine or bromine; and
(C) a disilazane having a general formula (II): 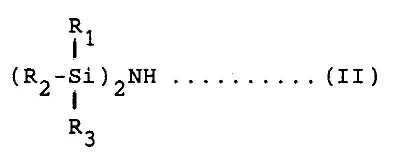 wherein R₁, R₂ and R₃ are hydrogen, methyl, ethyl, phenyl or vinyl, and can be the same or different from each other; and wherein the polymerization reaction is conducted in a waterless atmosphere at a reaction temperature of 25 to 350°C.

The invention in another aspect provides a method for manufacturing a ceramic, comprising manufacturing a hafnium-containing silazane polymer by the method according to the first aspect of the invention, fusing said hafnium-containing silazane polymer; shaping the fused polymer; infusibilizing the shaped polymer; and baking the infusibilized polymer.

The inventors had taken interest in the ceramics based on SiC-Si₃N₄ composition, which retain the excellent properties inherent to SiC and Si₃N₄, such as high workability, and they developed and proposed, as disclosed in Japanese Patent Kokai No. 63-193930 and Japanese Patent Kokai No. 63-210133, ceramic manufacturing methods which give an organic silazane polymer and a ceramic made therefrom.

A Hf-containing silazane polymer is more effectively obtained by the above polymerization reaction of reactants (A), (B) and (C) if the volatile by-product is dispelled from the reaction system by distillation. Also, it was found further that when such Hf-containing silazane polymer is rendered inorganic by fusing, shaping, infusibilizing, and baking it, a ceramic based on Si-Hf-C-N composition or Si-Hf-C-N-O composition is obtained at a high ceramic yield, and that this ceramic has a high strength and a high elastic modulus and can maintain sufficiently high strength and elasticity at temperatures of about 1400°C, which could not be attained by the conventional ceramics.

Hence, the present invention provides a method for manufacturing a hafnium-containing silazane polymer characterized in a polymerization reaction of which the reactants are a halide of an organic silicon compound, a hafnium compound having the general formula [I], and a silazane having the general formula [II], and a method for manufacturing a ceramic characterized in that the hafnium-containing silazane polymer thus obtained is fused, shaped, infusibilized, and baked.

The invention will be further described in detail.
Fig. 1 is an IR absorption spectrum taken of a hafnium-containing silazane polymer obtained in Example 1 of the invention;
Fig. 2 is an X-ray diffraction pattern taken of a ceramic obtained from the above polymer;
Fig. 3 is an X-ray diffraction pattern taken of a ceramic obtained in the Comparative Example.

In the method for manufacturing the hafnium-containing polycarbo silazane polymer of the invention, the starting material should be a mixture of a halide of an organic silicon compound and a hafnium compound having the general formula [I].

A preferable example of the halide of an organic silicon compound is a compound having a general formula [III]: 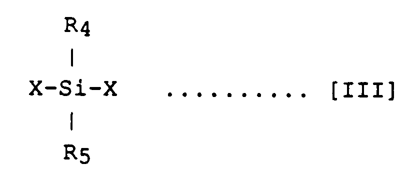
(wherein R₄ and R₅ are hydrogen, chlorine, bromine, methyl, ethyl, phenyl or vinyl, and can be the same or different from each other; and X is chlorine or bromine). Or another preferred example of the halide of an organic silicon compound is a compound having a general formula [IV]: 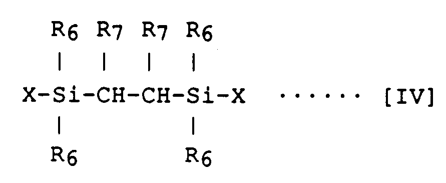
(wherein R₆ is hydrogen, chlorine, bromine, methyl, ethyl, phenyl or vinyl, R₇ is hydrogen or methyl, and X is chlorine or bromine). These and other halides can be used singly or in combination; but if the halide of formula [IV] alone, or a mixture of the halides [III] and [IV] is used, the resulting hafnium-containing silazane polymer, when it is melt-spun by a spinning apparatus, produces a green thread which has higher tensile strength and flexibility than the conventionally obtainable green threads, so that the new green thread scarcely breaks and it can be handled easily and enables smooth spinning operation. Therefore, the green thread of the invention is superior in workability and processability.

Some of the examples of the compound represented by the formula [III] are H₂SiCl₂, HSiCl₃, SiCl₄, CH₃SiCl₃, (CH₃)₂SiCl₂, (C₂H₅)SiCl₃, (C₂H₅)₂SiCl₂, C₆H₅SiCl₃, (C₆H₅)₂SiCl₂, CH₂ = CHSiCl₃, and (CH₂ = CH)₂SiCl₂, (CH₂ = CH) (CH₃)SiCl₂.

The examples of the compound represented by the formula [IV] include:
ClH₂SiCH₂CH₂SiH₂Cl
Cl₂HSiCH₂CH₂SiHCl₂
Cl₃SiCH₂CH₂SiCl₃
Cl(CH₃)₂SiCH₂CH₂Si(CH₃)₂Cl
Cl₂(CH₃)SiCH₂CH₂Si(CH₃)Cl₂
Cl(CH₃)₂SiCH(CH₃)CH(CH₃)Si(CH₃)₂Cl
Cl₂(CH₂ = CH)SiCH₂CH₂Si(CH = CH₂)Cl₂.

Of these, 1,2-bis(chlorodimethylsillyl)ethane, 1,2-bis(dichloromethylsillyl)ethane, and 1,2-bis(trichlorosillyl)ethane are preferred.

In the inventive manufacturing method, if a mixture of the compound represented by formula [III] and that by formula [IV] is used, it is desired that the mixing ratio of [III]: [IV] in molar percent is in the range of from 90: 10 to 60: 40. When the amount of the compound [IV] is less than 10 molar %, the resulting silazane polymer will be poor in strength and flexibility. For example, in the process of obtaining fibrous material by spinning such a silazane polymer after fusing it, the green thread produced is easy to break as it is wound and put through various subsequent processes, and as a result the overall ceramic yield becomes low, and the physical properties, such as strength, of the final product becomes poor. On the other hand, if the amount of the compound [IV] is greater than 40 molar %, a considerable amount of free carbon is created when the resulting hafnium-containing silazane is ceramicized, and this results in poor resistance to oxidation of the ceramic.

The hafnium compound represented by formula [I] can be HfCl₄, HfBr₄.

Also, in the present invention, it is desirous that a mixture consisting of the halides of organic silicon compounds [III], [IV] and a hafnium compound (hereinafter "mixture [M]") is used as the starting material, and a preferred mixing ratio of the hafnium compound as opposed to the total amount of the halides of organic silicon compounds [III] and [IV] is 0.01-10 molar %, or preferably 0.05-5 molar %, or still more preferably 0.1-3 molar %. If the ratio of the hafnium compound exceeds 10 molar %, an insoluble hafnium compound is formed and only insubstantial amount of hafnium can enter the polymer, whereby the polymer retains a considerable amount of unreacted chlorine which renders the polymer thermally unstable. On the other hand, if the ratio of the hafnium compound is less than 0.01 molar %, the heat resistance of the ceramicized material can be low.

It is desirable if the mixture [M] thus obtained is employed to participate in the reaction with the disilazane of formula [II]. Theoretically, the dosage of the disilazane of formula [II] can be such that its mol number is 1/2 of the mol number of the chlorine contained in the mixture [M], but in practice it is recommended that the dosage of the disilazane amounts to 0.7-1.2 times as much as said chlorine in mol number, or preferably 0.8-1.1 times. Incidentally, some of the examples of the disilazane compound represented by formula [II] are (H₃Si)₂NH, [H₂(CH₃)Si]₂NH, [H(CH₃)₂Si]₂NH, [(CH₃)₃Si]₂NH, [(C₂H₅)₃Si]₂NH, [C₆H₅)₃Si]₂NH, [CH₂ = CH(CH₃)₂Si]₂NH, [CH₂ = CH(C₆H₅)₂Si]₂NH, and [CH₂ = CH(C₂H₅)₂Si]₂NH. These and other disilazane compounds can be used singly or in combination.

In the case where the mixture [M] is reacted with a disilazane [II], the mixture [M] and the disilazane [II] can be dissolved in a solvent to thereby undergo the reaction, but it is economically preferable to effect the reaction without use of a solvent. The reaction is effectively conducted in a waterless atmosphere at a reaction temperature of 25-350°C, or preferably 150-350°C. If the reaction temperature is lower than 25°C, the reaction does not proceed, and if it is higher than 350°C, the reaction rate gets so high that it becomes difficult to control the polymerization degree and it is possible that an insoluble and infusible polymer is produced. In order to obtain a precursor for a ceramic fiber in particular, the reaction should be conducted at 150 to 350°C for a period of 0.5 hour to 5 hours, or preferably 1 to 3 hours.

After the completion of the reaction as specified above, the by-product volatile element is removed from the reaction system by distillation, and as a result hafnium-containing silazane polymer can be obtained in various forms from oily fluid to hard solid.

It is thought that such mixture [M] when reacted with disilazane will go through series of reactions A and B as follows: 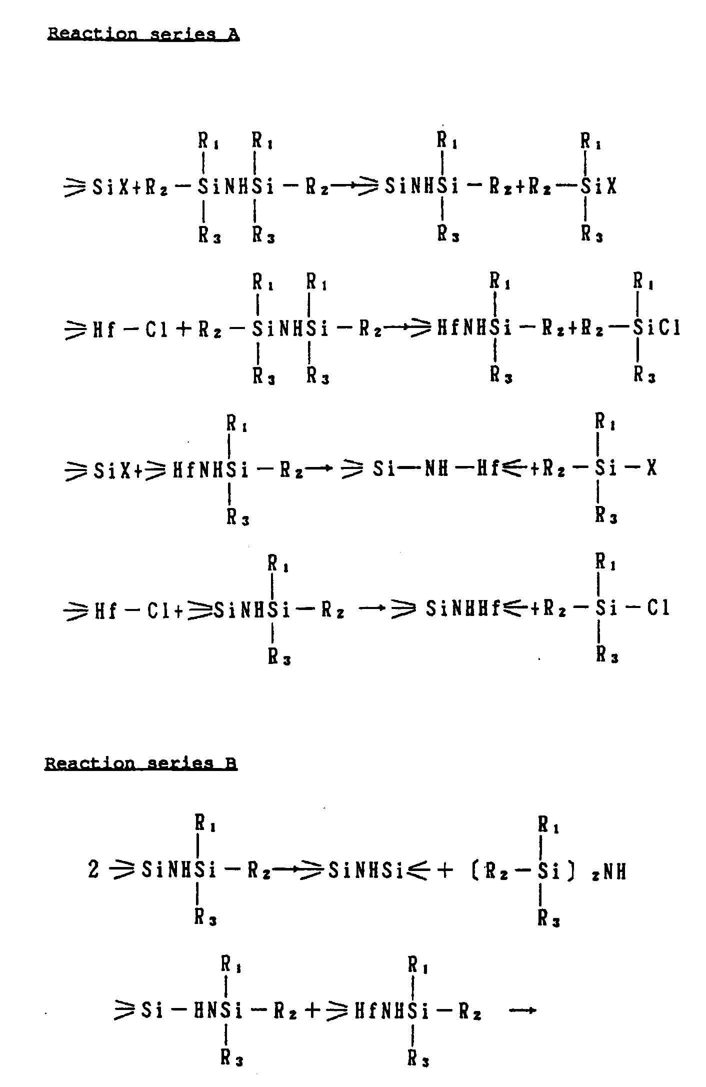 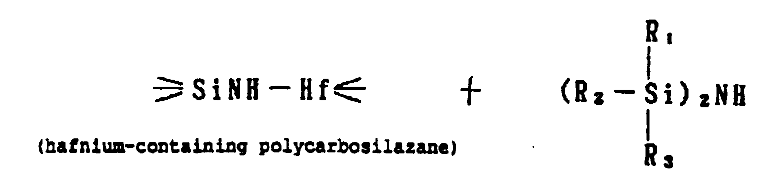
Therefore, at first, it is thought, the reactions of series A take place, and then as the temperature rises, the condensation reactions of series B take place and as a result the hafnium-containing silazane polymer having the high molecular weights in the aimed range is obtained.

Incidentally, the low molecular by-products produced incidentally to the hafnium-containing silazane polymer are distilled off the reaction system through an atmospheric or vacuum distillation conducted during the progress of the reactions, and these by-products can be recycled.

It is possible to control at will the polymerization degree and the melting point of the hafnium-containing silazane polymer through modification of the mix proportion of the organic silicon compound, the reaction temperature, reaction time, etc. Further, it is possible to adjust the mean molecular weight and the melting point of the final polymer product by conducting a vacuum distillation, while hot, to strip off the oligomers having relatively low molecular weights.

The thus obtained hafnium-containing silazane polymer is excellent in moldability and workability, so that it is suitable to shape it in various forms, particularly in fibers and sheets; it is also useful to utilize the polymer as a binder or adhesive.

The ceramic manufacturing method according to the present invention comprises the steps of fusing or melting the above-mentioned hafnium-containing silazane polymer, shaping it, infusibilizing it, and baking it. It is desirous if the polymer used in this method has a melting point of 60-250°C and a molecular weight of 800-5000 (measured by benzene cryoscoping depressant method).

It is possible to fuse and mold the hafnium-containing silazane polymer as it is produced; it is, however, preferable to dissolve the silazane polymer in an organic solvent such as hexane, benzene, toluene and tetrahydrofuran, and remove the insolubles by filtrating the solution, and the solvent is stripped through a vacuum distillation, or the melt of the silazane polymer is filtrated as it is, while hot, to thereby get rid of the insolubles. By conducting such treatment, it is possible to remove insoluble impurities from the polymer, and to thereby attain high strength and stable quality in the resulting ceramics.

The manner of melting, shaping, infusibilizing, and baking the hafnium-containing silazane polymer is not critical, and the conventional procedures will do to melt the polymer, mold it into any desired shape, infusibilize it, bake it, and eventually obtain ceramic articles of various forms.

For instance, when a ceramic fiber is desired, the hafnium-containing silazane polymer is first heated to form a melt and then spun by the melt spinning method. The spinning temperature is determined depending on the melting point of the polymer, and is favorably in the range of from 100 to 300°C.

Infusibilization of molded polymer can be achieved by heating it in the air, and the heating temperature is preferably 50-250°C. If the temperature is lower than 50°C, no infusibilization takes place, and if higher than 250°C, then the polymer is fused and/or a considerable amount of oxygen enters into the ceramic whereby the strength of the ceramic will be poor.

The present inventors have proposed an alternative infusibilization method in U. S. Patent Application Serial No. 371,716. According to this proposal, a silazane polymer is infusibilized by first treating it with a gas containing the vapor of one or more silicon compounds represented by a general formula [V]:

R'ₐSiZ₄₋ₐ [V]

wherein R′ is hydrogen, lower alkyl, alkenyl, or aryl, and Z is chlorine, bromine, or iodine; a is an integer of 0 to 2, and if a is 2, R′ can be homogeneous or heterogeneous; and secondly treating the polymer with water-containing gas or ammonia-containing gas.

This method of U. S. Patent Application Serial No. 371,716 is characterized by infusibilizing the silazane polymer, e.g. a green thread as obtained in the above-mentioned melt spinning method, comprising a first step of treating the thread with a gas containing the vapor of one or more silicon compounds represented by a general formula [V] as the infusibilizing agent, and then a second step of treating the thread with water-containing gas or ammonia-containing gas.

The examples of the infusibilizing agent represented by the formula [V] include:
CH₃SiCl₃, (CH₃)₂SiCl₂, (C₂H₅)SiHCl₂, (C₆H₅)₂SiCl₂, C₆H₅SiCl₃, (C₆H₅)₃SiCl, CH₂ = CHSiCl₃, (CH₂ = CH)₂SiCl₂, HSiCl₃, H₂SiCl₂, SiCl₄, H(CH₃)SiCl₂, H(CH₂ = CH)SiCl₂, (CH₂ = CH)C₆H₅SiCl₂. Of these, HSiCl₃ and SiCl₄ are preferred. The manner of treating the silazane polymer article with the gas containing such infusibilizing agent(s) is not critical. For example, an inert gas such as N₂ and Ar may be used as a carrier gas. The carrier gas is passed into the infusibilizing agent and then to a region where the article is placed whereupon the article is contacted with the carrier gas having the vapor of the agent carried thereon. The concentration of the infusibilizing agent in the gas may be controlled to a desired level by adjusting the temperature of the infusibilizing agent source so as to give an appropriate vapor pressure. If the concentration of the agent in the gas is too high, the gas may be diluted with an inert gas. In general, the concentration of infusibilizing agent vapor is preferably controlled to 0.001 to 0.1 mol of the agent per liter of the carrier gas. The optimum treating temperature and time vary with a particular type of hafnium-containing silazane polymer used. Usually, the treating temperature is a sufficiently low temperature to maintain the polymer infusible, that is, a temperature sufficiently lower than the melting point of the polymer. The treating time is a sufficient time to render the articles substantially infusible (normally about 5 to 240 minutes).

At the end of the first infusibilizing step, the polymer articles become insoluble in commonly used solvents, for example, benzene, hexane, toluene, and tetrahydrofuran. However, the polymer article resulting from only the first infusibilizing step is not fully infusible and will fuse during subsequent pyrolysis. Therefore, the second step of treating with water-containing gas or ammonia-containing gas is essential to enhancing the infusibility of the polymer article.

The manner of treatment in the second step is not particularly critical either. In the case of treatment with water-containing gas, for example, the articles resulting from the first infusibilizing step may be simply exposed in the water-containing gas for a predetermined time to render the article completely infusible. The air exposure is simple, but somewhat difficult to consistently yield ceramic article having high strength and modulus because the humidity in air is not always constant. Due to varying humidity, subsequent baking may produce a ceramic article having a varying oxygen content, or merged fibers. Therefore, the second step is preferably carried out by passing air or an inert gas such as N₂ and Ar into water at a controlled temperature, more preferably bubbling air or inert gas through water at a predetermined rate, thereby forming air or inert gas containing saturated water vapor at the temperature. The resulting gas with saturated water vapor is passed over the articles for sufficient time to complete infusibilization. The temperature of water into which air or inert gas is bubbled at the predetermined rate varies over the range of 0 to 100°C, more preferably 0 to 70°C, or still more preferably 0 to 30°C.

In the case of using ammonia, it is also preferable to control the concentration of ammonium to an adequate range, which may be 0.01 to 100 volume %, preferably 0.2 to 50 volume %, or still more preferably 0,.5 to 10 volume %. If the concentration of ammonia in the gas is too high, the ammonia may be diluted with an inert gas such as Ar and He or N₂ gas and the diluted ammonia gas is passed over the articles for sufficient time to complete infusibilization.

Like the first step, the optimum treating temperature and time vary with a particular type of hafnium-containing silazane polymer used. Usually, the treating temperature is a temperature sufficiently lower than the melting point of the polymer. The treating time is a sufficient time to render the articles substantially infusible (normally about 5 to 240 minutes).

The polymeric articles thus made infusible such as infusibilized thread article are then baked at high temperatures under tension or in free state, in a conventional manner, and as a result ceramic articles based on Si-Hf-C-N composition having excellent strength modulus, heat resistance and oxidation resistance are obtained. This baking is preferably carried out in vacuum or in an inert gas such as argon or in an atmosphere of N₂ gas, H₂ gas, or NH₃ gas, or in a mixture of any of these gases at a temperature of about 700 to 2000°C, or preferably 700 to 1500°C. Also, in the case of infusibilized precursor fibers, it is preferred to bake them under tension. Under such preferred conditions, it is possible to obtain ceramic fibers of quality as typified by a tensile strength of 200 to 300 kg/mm² and a modulus of elasticity of 14 to 25 t/mm².

Also, if this hafnium-containing silazane polymer is added as a binder to a powder of ceramic starting material consisting of one or more of alumina, silicon carbide, silicon nitride, boron nitride, and the like, it is possible to easily obtain high quality ceramic compact by baking the powder. In the preparation of this ceramic powder, it is preferable to dose the hafnium-containing silazane polymer in an amount of 2-10 weight parts, or maybe 3-5 weight parts, per 100 weight parts of the ceramic starting material. Incidentally, in this procedure, if the mixture compact of the starting powder and the additive hafnium-containing silazane polymer does not undergo deformation during the later baking step, it is not necessary to infusibilize the compact.

As explained above, according to the method for manufacturing a hafnium-containing silazane polymer of the present invention, it is possible to manufacture the hafnium-containing silazane polymer in an industrially advantageous manner with the result that the resulting silazane polymer is excellent in workability and processability, and easy to handle for the reason of high strength and flexibility. What is more, since the silazane polymer is ceramicized at a high ceramic yield, it makes a desirous ceramic precursor, especially for manufacture of fibrous ceramics.

According to the method for manufacturing ceramics of the invention, the hafnium-containing silazane polymer can be easily molded into desired shapes such as fiber and sheet, and baked thereafter, so that it is possible to obtain high quality ceramics based on Si-Hf-C-N composition or Si-Hf-C-N-O composition at a high ceramic yield which ceramics is characterized by high strength, high modulus, and excellent heat resistance and oxidation resistance.

Examples of the present invention are given below together with comparative examples by way of illustration and not by way of limitation.

### Example 1

### Polymerization Step

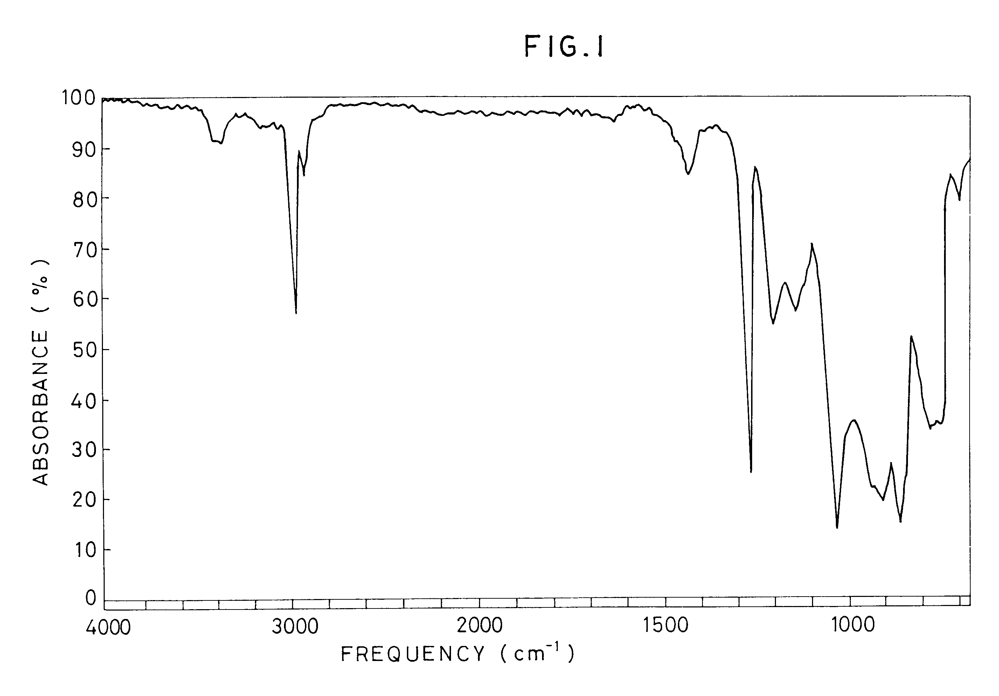

A dried 500-milliliter four-necked flask equipped with a stirrer, a thermometer, a gas inlet tube, a dropping funnel, and a condenser was charged with 12.8 g (0.05 mol) of 1,2-bis(methyldichlorosilyl)ethane, 62.3 g (0.45 mol) of methyltrichlorosilane, and 0.8 g (2.5 x 10⁻³ mol) of HfCl₄. Then, 266 g (1.65 mol) of [(CH₃)₃Si]₂NH was dripped into the flask by means of the dropping funnel. The mixture was gradually heated in an N₂ atmosphere (reflux started when the flask temperature reached 90°C and the vapor temperature was 58°C); the reaction temperature was thus raised up to 300°C, while the more volatile components (trimethylchlorosilane and hexamethyldisilazane) evaporated and escaped from the flask, and when the temperature reached 300°C, it was maintained thereat for four hours. The reaction product was cooled to room temperature, and to this was added 100 ml of dehydrated hexane to thereby dissolve the reaction product; the insoluble matters were removed by filtration, and the filtrate was stripped of the hexane and lower molecular matters under a reduced pressure of 10 mmHg at 250°C. The residue was a yellowish brown glass-like solid and weighed 38 g. The molecular weight of this substance was 1883 (measured by benzene cryoscoping depressant method, as are all the molecular weight data hereinafter given); the melting point was 160°C. Fig. 1 is an IR absorption spectrum taken of the silazane polymer thus obtained. The spectrum indicates that the absorption was caused at 3400 cm⁻¹ by NH, at 2980 cm⁻¹ by CH and at 1260 cm⁻¹ by SiCH₃.

### Fiber Preparation Step

Ten grams of the silazane polymer obtained in the polymerization step were melt-spun at 210°C by the use of a mono-hole melt spinning apparatus having a thin hole of 0.5 mm diameter. The spinning operation went smoothly at a take-up speed of 250 m/min. Then, the resultant green thread was placed and infusibilized in the air while the temperature was raised from 100°C to 220°C (at a rate of 10°C/hr).

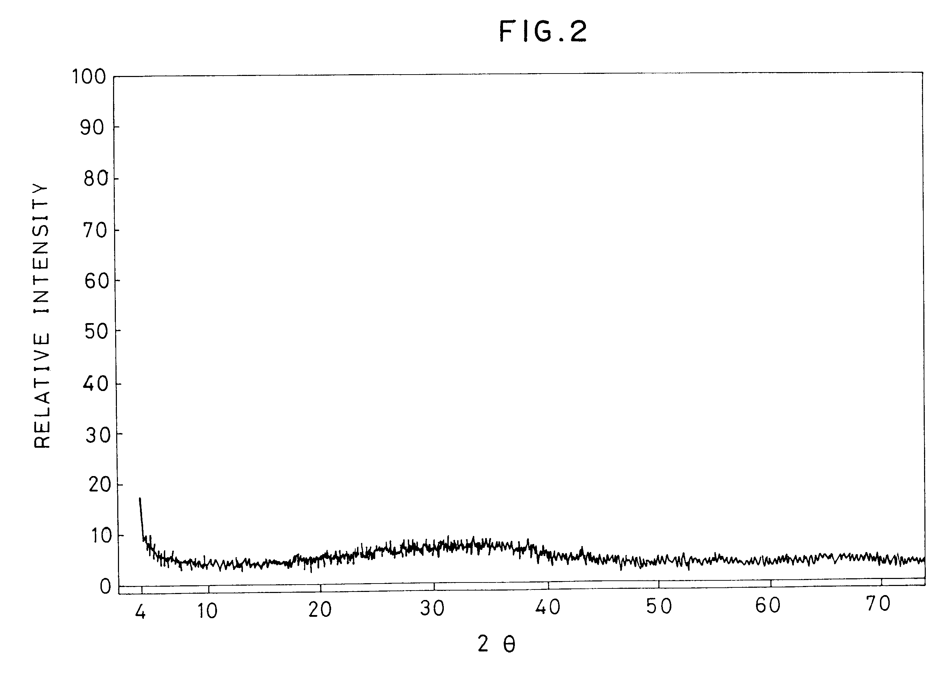

Thereafter, while kept stretched a little, the infusibilized thread was baked in an N₂ gas stream for 30 minutes at a temperature of 1400°C, to which the temperature was raised at a rate of 200°C/hr. The ceramic yield was 70%, and the resulting fibrous substance had a fiber diameter of 13 µ, a tensile strength of 195 kg/mm² and a modulus of 14.5 t/mm². When the fiber composition was analyzed, it was confirmed to be a fiber based on Si-Hf-C-N-O composition comprising 54% of Si, 13.5% of C, 20.8% of N, 10.2% of O, and 1.5% of Hf. Fig. 2 is an X-ray diffraction pattern taken of this fiber. The ceramic thus obtained was found "noncrystalline." (Since polymers never consist of a single molecular species, a polymer cannot be a crystal in exactly the same way as a pure compound in which the molecules pack in a perfectly ordered way. However, some polymers have many of the physical characteristics of crystals and are said to be "crystalline." The polymers are noncrystalline when spun into thread, but crystallization can be induced by slow stretching.)

### Example 2

### Polymerization Step

Like Example 1, a dried 500-milliliter four-necked flask of the same make was charged with 25.6 g (0.1 mol) of 1,2-bis(methyldichlorosilyl)ethane, 59.8 g (0.4 mol) of methyltrichlorosilane, and 1.6 g (0.005 mol) of HfCl₄. Then, 261 g (1.62 mol) of [(CH₃)₃Si]₂NH was dripped into the flask by means of the dropping funnel like Example 1. The mixture was heated at 300°C and let to undergo reactions for three hours. Then, the reaction product was cooled to room temperature, and it was treated in the same procedure as in Example 1 and a yellowish brown solid was obtained in an amount of 45 g. The molecular weight of this substance was 2361; the melting point was 167°C.

### Fiber Preparation Step

Ten grams of the silazane polymer obtained in the polymerization step of Example 2 were melt-spun at 215°C by the use of the same mono-hole melt spinning apparatus as used in Example 1. Then, the resultant green thread was suspended in a mullite tube furnace having a dimension of 50 mm (inner dia.) x 1 m (height), and the furnace temperature was adjusted to 40°C; the green thread was treated with trichlorosilane gas (gas concentration: 0.7 vol%) for thirty minutes; then, the thread was treated with gaseous ammonia (gas concentration: 6 vol%) for thirty minutes whereby it was infusibilized. Next, the atmosphere in the mullite tube furnace was replaced with an N₂ gas, and the green thread was baked at a temperature of 1300°C (temperature rise rate: 240°C/hr) in an N₂ stream for thirty minutes. As a result, a black, glossy fiber was obtained. The ceramic yield was 72%, and the obtained fiber had a fiber diameter of 12 µ, a tensile strength of 243 kg/mm², and an elastic modulus of 18.5 t/mm².

Thereafter, this fiber was subjected to similar infusibilization step, and a 30-minute-long baking at 1400°C, and the result was that the fiber diameter was 12 µ, the tensile strength turned 247 kg/mm², and the elastic modulus 19 t/mm². Therefore, there was scarce degradation in physical properties. The X-ray diffraction pattern taken of this fiber showed that the fiber was noncrystalline, as it was when first baked at 1300°C. The ceramic was confirmed to be of Si-Hf-C-N-O composition comprising 59.7% of Si, 11.7% of C, 25.6% of N, and 2.99% of Hf.

### Example 3

### Polymerization Step

Like Example 1, a dried 500-milliliter four-necked flask of the same make was charged with 51.2 g (0.2 mol) of 1,2-bis(methyldichlorosilyl)ethane, 44.9 g (0.3 mol) of methyltrichlorosilane, and 8.01 g (0.025 mol) of HfCl₄. Then, 290 g (1.8 mol) of [(CH₃)₃Si]₂NH was dripped into the flask like Example 1. The mixture was heated at 310°C and let to undergo reactions for 1.5 hours. As a result, a blackish brown solid was obtained in an amount of 48 g. The molecular weight of this substance was 4500; the melting point was 227°C.

### Fiber Preparation Step

Ten grams of the polymer obtained in the polymerization step of Example 3 were melt-spun at 280°C by the use of the same mono-hole melt spinning apparatus as used in Example 1. Then, the resultant green thread was infusibilized with trichlorosilane gas and gaseous ammonia exactly in the same manner as in Example 2; then, the thread was baked at a temperature of 1400°C in an N₂ stream for thirty minutes.

The ceramic yield was 75%, and the obtained fiber had a fiber diameter of 10 µ, a tensile strength of 235 kg/mm², and an elastic modulus of 17 t/mm². The ceramic was confirmed to be of Si-Hf-C-N composition comprising 53.6% of Si, 12.5% of C, 23.5% of N, and 10.36% of Hf; the X-ray diffraction pattern indicated that the ceramic was noncrystalline.

### Example 4

### Polymerization Step

Like Example 1, a dried 500-milliliter four-necked flask of the same make was charged with 12.8 g (0.05 mol) of 1,2-bis(methyldichlorosilyl)ethane, 67.2 g (0.45 mol) of methyltrichlorosilane, and 4.8 g (0.015 mol) of HfCl₄. Then, 259 g (1.61 mol) of [(CH₃)₃Si]₂NH was dripped into the flask like Example 1. The mixture was heated at 300°C and let to undergo reactions for 2 hours. As a result, a yellowish brown solid was obtained in an amount of 43.5 g. The molecular weight of this substance was 2850; the melting point was 175°C.

### Fiber Preparation Step

Fifteen grams of the polymer obtained in the polymerization step of Example 4 were melt-spun in the same manner as in Example 1. Then, the resultant green thread was infusibilized with trichlorosilane gas and gaseous ammonia exactly in the same manner as in Example 2; then, the thread was baked, respectively, at temperatures of 1200°C, 1300°C, 1400°C, 1500°C, and 1600°C for thirty minutes in an N₂ stream. The physical properties of the resulting fibers are given in Table 1 below.

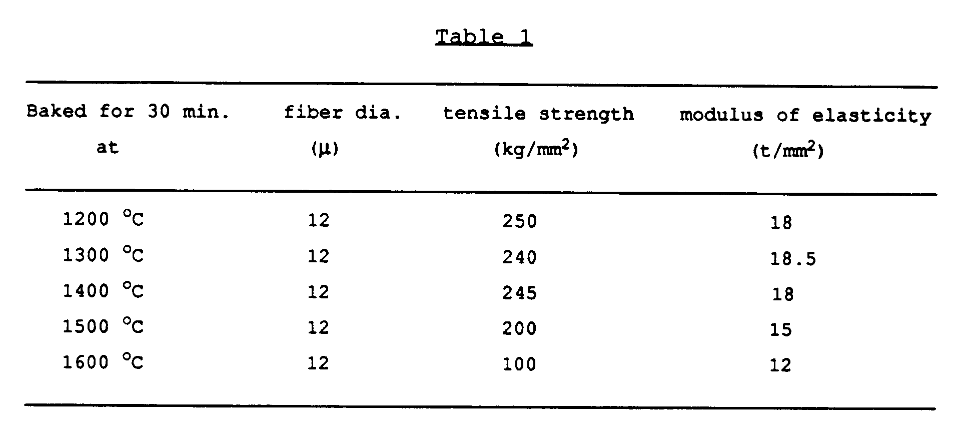

Table 1 tells that the tensile strength did not deteriorate upto the baking temperature of 1400°C. Also, according to the result of X-ray diffraction, the ceramic was noncrystalline upto the baking temperature of 1400°C; when the polymer was baked at a temperature higher than 1400°C, crystallization could result. When the polymer was baked at a temperature at 1600°C, the diffraction peaks observed indicated the existences of Si₃N₄, SiC, HfN, HfC, etc.

### Example 5

### Polymerization Step

Like Example 1, a dried 500-milliliter four-necked flask of the same make was charged with 74.8 g (0.5 mol) of methyltrichlorosilane and 1.6 g (0.005 mol) of HfCl₄. Then, 244.7 g (1.52 mol) of [(CH₃)₃Si]₂NH was dripped into the flask like Example 1. The mixture was heated at 320°C and let to undergo reactions for 2 hours. As a result, a yellowish brown solid was obtained in an amount of 42 g. The molecular weight of this substance was 1800; the melting point was 138°C.

### Fiber Preparation Step

Fifteen grams of the polymer obtained in the polymerization step of Example 5 were melt-spun in the same manner as in Example 1. Then, the resultant green thread was infusibilized with trichlorosilane gas and gaseous ammonia exactly in the same manner as in Example 2; then, the thread was baked at a temperature of 1400°C for thirty minutes in an N₂ stream.

The ceramic yield was 67%, and the obtained fiber had a fiber diameter of 14 µ, a tensile strength of 220 kg/mm², and an elastic modulus of 16.5 t/mm². The ceramic was confirmed to contain 2.85% of Hf; the X-ray diffraction pattern indicated that the ceramic was noncrystalline.

### Comparative Example 1

### Polymerization Step

A dried 500-milliliter four-necked flask equipped with a stirrer, a thermometer, a gas inlet tube, a dropping funnel, and a condenser was charged with 74.8 g (0.5 mol) of methyltrichlorosilane. Then, 241 g (1.5 mol) of [(CH₃)₃Si]₂NH was dripped into the flask by means of the dropping funnel. The mixture was gradually heated in an N₂ atmosphere; reflux started when the flask temperature reached 67°C and the vapor temperature was 59°C; the reaction temperature was thus raised up to 310°C, while the more volatile components (trimethylchlorosilane and hexamethyldisilane) evaporated and escaped from the flask, and when the temperature reached 310°C, it was maintained thereat for 3.5 hours. The reaction product was cooled to room temperature, and to this was added 150 ml of dehydrated hexane to thereby dissolve the reaction product; the insoluble matters were removed by filtration, and the filtrate was stripped of the hexane and lower molecular matters under a reduced pressure of 10 mmHg at 250°C. The residue was a transparent solid and weighed 31 g. The molecular weight of this substance was 1926; the melting point was 178°C. The IR absorption spectrum taken of the solid indicated that the absorption was caused at 3400 cm⁻¹ by NH, at 2980 cm⁻¹ by CH and at 1250 cm⁻¹ by SiCH₃.

### Fiber Preparation Step

The polymer obtained in the polymerization step was melt-spun at 230°C by the use of the same mono-hole melt spinning apparatus used in the fiber preparation step of Example 1. However, the spinning operation went poorly: the green thread was very brittle and it broke frequently during the spinning operation. The tensile strength of the thread was 500 g/mm², which was 1/14 of that of the green thread obtained in Example 1. Then, the resultant green thread was infusibilized with trichlorosilane and gaseous ammonia in the same manner and under the same conditions as employed in the fiber preparation step of Example 2. Thereafter, while kept stretched a little, the infusibilized thread was baked in an N₂ gas stream for 30 minutes at respective temperatures of 1200°C, 1300°C, 1350°C, 1400°C, and 1500°C, to which the temperature was raised at a rate of 200°C/hr. The physical properties of the resulting fibers are given in Table 2 below.

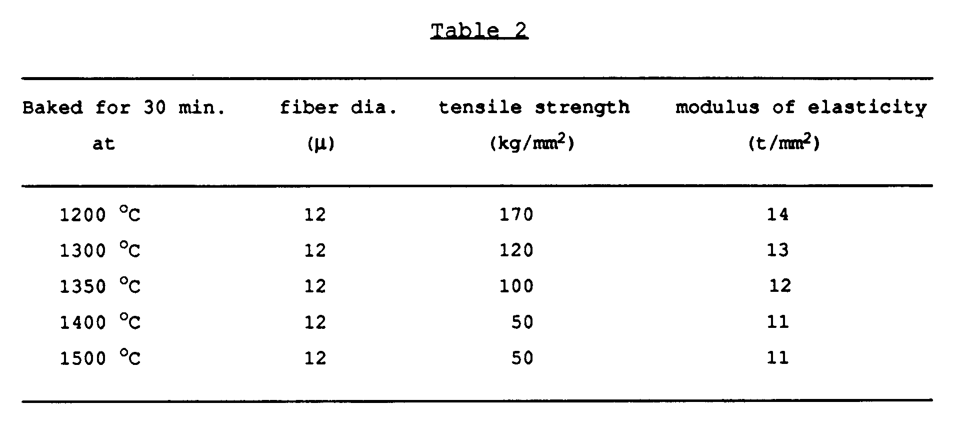

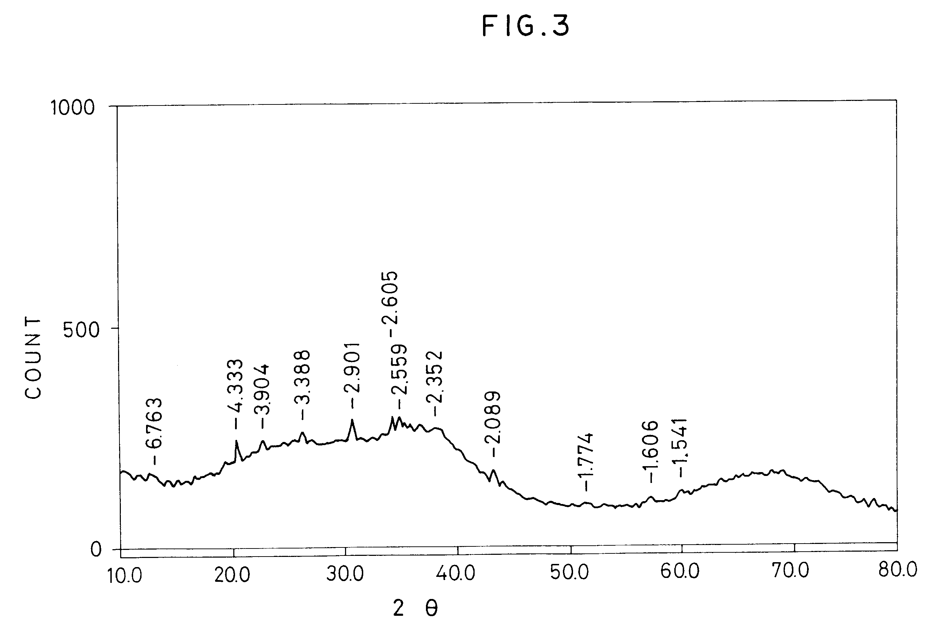

Table 2 tells that the tensile strength and the modulus of elasticity of the fiber baked at 1200°C were far poorer than those of the counterpart in Table 1, and the tensile strength deteriorated sharply when the baking temperature was 1400°C or higher. According to the result of X-ray diffraction, the ceramic was noncrystalline upto the baking temperature of 1200°C. When the polymer was baked at a temperature at 1300°C, the diffraction peaks were already observed; at 1400°C, diffraction was clearly observed which indicated the existences of Si₃N₄. Fig. 3 shows the X-ray diffraction pattern.

## Claims

1. A method for manufacturing a hafnium-containing silazane polymer characterized by obtaining a hafnium-containing silazane polymer through a polymerization reaction of which the reactants are
(A) a halide of an organic silicon compound;
(B) a hafnium compound having a general formula (I):
HfX₄ (I)
wherein X is chlorine or bromine; and
(C) a disilazane having a general formula (II): 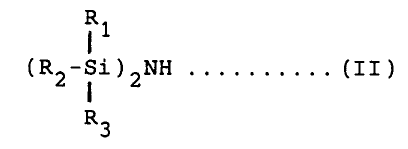 wherein R₁, R₂ and R₃ are hydrogen, methyl, ethyl, phenyl or vinyl, and can be the same or different from each other; and wherein the polymerization reaction is conducted in a waterless atmosphere at a reaction temperature of 25 to 350°C.

2. A method for manufacturing a ceramic, comprising manufacturing a hafnium-containing silazane polymer by the method as claimed in claim 1, fusing said hafnium-containing silazane polymer; shaping the fused polymer; infusibilizing the shaped polymer; and baking the infusibilized polymer.

## Patentansprüche

1. Verfahren zum Herstellen eines Hafnium enthaltenden Silazanpolymers, dadurch gekennzeichnet, daß ein Hafnium enthaltendes Silazanpolymer durch eine Polymerisationsreaktion erhalten wird, deren Reaktanden sind
(A) ein Halid einer organischen Siliziumverbindung;
(B) eine Hafniumverbindung mit einer allgemeinen Formel (I):
HfX₄ (I)
wobei X Chlor oder Brom ist; und
(C) ein Disilazan mit einer allgemeinen Formel (II): 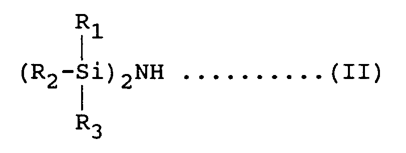 wobei R₁, R₂ und R₃ Wasserstoff, Methyl, Ethyl, Phenyl oder Vinyl sind und gleich oder voneinander verschieden sein können; und wobei die Polymerisationsreaktion in einer wasserfreien Atmosphäre bei einer Reaktionstemperatur von 25 bis 350 °C durchgeführt wird.

2. Verfahren zum Herstellen einer Keramik, beinhaltend das Herstellen eines Hafnium enthaltenden Silazanpolymers mit dem Verfahren nach Anspruch 1, das Schmelzen des Hafnium enthaltenden Silazanpolymers; das Formen des geschmolzenen Polymers; das Unschmelzbarmachen des geformten Polymers; und das Backen des unschmelzbar gemachten Polymers.

## Revendications

1. Procédé de préparation d'un polymère silazane contenant des atomes d'hafnium caractérisé en ce qu'on obtient un polymère silazane contenant des atomes d'hafnium par une réaction de polymérisation dont les réactifs sont:
(A) un halogénure d'un composé organique du silicium;
(B) un composé de l'hafnium ayant la formule générale (I):
HfX₄ (I)
dans laquelle X est du chlore ou du brome; et
(C) un disilazane ayant une formule générale (II): 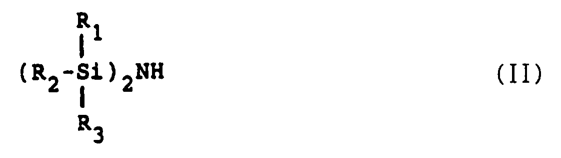 dans laquelle R₁, R₂ et R₃ sont de l'hydrogène, un méthyle, un éthyle, un phényle ou un vinyle, et peuvent être identiques ou différents entre eux; et dans lequel la réaction de polymérisation est conduite dans une atmosphère sans eau à une température de réaction comprise entre 25 et 350°C.

2. Procédé de fabrication d'une matière céramique comprenant la fabrication d'un polymère silazane contenant des atomes d'hafnium par le procédé tel que revendiqué dans la revendication 1; faire fondre ledit polymère silazane contenant des atomes d'hafnium; mettre en forme le polymère fondu; rendre le polymère mis en forme résistant à chaud; et cuire le polymère rendu résistant à chaud.
